(19) **Europäisches Patentamt**

**European Patent Office**

**Office européen des brevets**

(11) Veröffentlichungsnummer: **0 309 786 B1**

(12) **EUROPÄISCHE PATENTSCHRIFT**

(45) Veröffentlichungstag der Patentschrift: **21.10.92**

(51) Int. Cl.5: **B23K 35/30**

(21) Anmeldenummer: **88114578.3**

(22) Anmeldetag: **07.09.88**

(54) **Nickel-Basis-Lot für Hochtemperatur-Lötverbindungen.**

(30) Priorität: **29.09.87 DE 3732749**
**30.09.87 DE 3732998**

(43) Veröffentlichungstag der Anmeldung:
**05.04.89 Patentblatt 89/14**

(45) Bekanntmachung des Hinweises auf die
Patenterteilung:
**21.10.92 Patentblatt 92/43**

(84) Benannte Vertragsstaaten:
**CH DE FR GB IT LI SE**

(56) Entgegenhaltungen:
**EP-A- 0 051 461      EP-A- 0 108 959**
**DE-A- 3 027 730      US-A- 4 169 744**
**US-A- 4 302 515      US-A- 4 314 661**

(73) Patentinhaber: **VACUUMSCHMELZE GMBH**
**Grüner Weg 37 Postfach 2253**
**W-6450 Hanau 1(DE)**

(72) Erfinder: **Falk, Joachim, Dr.**
**Eichenweg 26**
**W-6454 Bruchköbel(DE)**

EP 0 309 786 B1

## Beschreibung

Die Erfindung betrifft ein nickelhaltiges Lot für Hochtemperatur-Lötverbindungen von Stählen und Nickel-Basis-Legierungen.

Nickel-Basis-Lote werden überwiegend für HochtemperaturLötverbindungen von Stählen und Nickel-Basis-Legierungen verwendet. Wegen der unvermeidbaren versprödenden intermetallischen Verbindungen, werden die bisher üblichen Nickel-Lote nur in Pulverform oder einer daraus hergestellten Lotpaste oder als amorphe Bänder hergestellt.

Durch die DE-PS 27 55 435 ist eine homogene duktile Lötfolie für das Hartlöten von Metallteilen bekannt, die mit Hilfe der an sich bekannten Rascherstarrungstechnik hergestellt wird. Sie besteht aus 0 bis 4 Atom-% Eisen, 0 bis 21 Atom-% Chrom, 0 bis 16 Atom-% Bor, 0 bis 19 Atom-% Silizium, 0 bis 22 Atom-% Phosphor und als Rest Nickel und gegebenenfalls Verunreinigungen, wobei die Gesamtheit von Eisen, Chrom und Nickel im Bereich von 76 bis 84 Atom-% und die Gesamtheit von Bor, Silizium und Phosphor im Bereich von 16 bis 24 Atom-% liegen soll. Sie soll im wesentlichen glasartig, also amorph sein.

Aus der EP-A- 108 595 ist ein Nickel-Basis-Lot bekannt, das aus 17 bis 20 Atom-% Chrom, 4 bis 10 Atom-% Bor, 10 bis 16 Atom-% Silizium, Rest Nickel besteht und vorzugsweise zumindest zu 50 % amorph sein soll. Weitere Nickel-Basis-Lote, die mindestens zu 50 % amorph sind, sind aus der US-A-4 302 515 und der EP-A- 051 461 bekannt. Ferner sind in der DE-A- 30 27 730 borfreie Nickel-Chrom-Silizium-Lote angegeben, die jedoch nicht mit einem Rascherstarrungsverfahren hergestellt worden sind und daher eine verringerte Duktilität und mechanische Festigkeit aufweisen.

Aus der US-A 4 169 744 sind ternäre Nickel-Chrom-Silizium-Lote bekannt, die durch ein Rascherstarrungsverfahren hergestellt werden und vorzugsweise mindestens zu 10 % eine amorphe Phase aufweisen.

Ferner ist durch die EP-A- 056 141 eine duktile Hartlötfolie mit wenigstens 50 % glasartiger Struktur und mit einem Gehalt an Palladium, Bor und Nickel bekannt, die aus 1 bis 41 Atom-% Palladium, 0 bis 20 Atom-% Chrom, 11 bis 20 Atom-% Bor und Rest Nickel besteht, wobei die Gesamtheit von Nickel, Palladium und Chrom im Bereich von 80 bis 89 Atom-% liegt.

Diese und ähnliche Legierungszusammensetzungen sind im wesentlichen geeignet für das Hartlöten bei hohen Temperaturen von austenitischen, martensitischen und ferritischen rostfreien Stählen sowie von Legierungen auf Nickel-Grundlage. Das Löten bei hohen Temperaturen, die im wesentlichen über 1000 °C liegen, ist bei solchen Bauteilen erforderlich, die im Gebrauch hohen Temperaturen ausgesetzt sind. Als Beispiel können hier Teile von Flugzeugturbinen oder metallische Abgaskatalysatoren genannt werden.

Beim Verlöten dünner Werkstoffe wird das Material um die Lötstelle herum durch Hineindiffundieren des Lotes massiv verändert. Hierdurch werden die Eigenschaften des Materials meist drastisch verschlechtert. Hierzu zählen neben den mechanischen Eigenschaften, wie zum Beispiel eine mögliche Versprödung, auch die Korrosionseigenschaften, wie zum Beispiel die Verschlechterung der Oxidationseigenschaften. Das Problem ist bei Hochtemperatur-Werkstoffen, wie sie beispielsweise bei Abgaskatalysatoren für Kraftfahrzeuge verwendet werden, als besonders erschwerend anzusehen.

Als Trägermaterial für diese Abgaskatalysatoren haben sich insbesondere Fe-Cr-Al-Legierungen wegen ihrer hohen Oxidationsbeständigkeit bestens bewährt. Um den Durchströmwiderstand im Katalysator möglichst gering zu halten, sind hier dünne Bänder von etwa 50 µm erforderlich, aus denen der Trägerkörper gewickelt wird. Aus Festigkeitsgründen wird eine Verlötung der einzelnen Wickellagen untereinander verlangt. Dies hat sich nicht nur als sehr schwierig erwiesen, sondern diese Lötstellen konnten auch nicht befriedigen, und zwar aus folgenden Gründen:

a) Die Lötung mit Pulverloten erfordert einen erheblichen technischen Aufwand, weil eine Benetzung und Verunreinigung durch das Lot auch an nicht zu verlötenden Stellen unvermeidlich ist.

b) Eine genaue Dosierung des Lotes in Pulverform ist kaum möglich; dadurch kann eine massive Veränderung der Legierungszusammensetzung des etwa 50 µm Trägermaterials an der Lötstelle eintreten.

c) Lotpasten werden aus Pulverloten mit einem organischen Binder hergestellt, der bis zu 50 % der Lotpaste ausmachen kann. Die Verwendung solcher Pasten ist durch diesen Binder eingeschränkt, denn er muß während des Lötens verbrennen. Dadurch verschlechtert sich die Benetzung des Lotes, und eine Verunreinigung der Lötstelle mit Kohlenstoff kann nicht vermieden werden.

d) Die Lötung mit amorphen Lotbändern ist insofern unbefriedigend, weil sich herausgestellt hat, daß die sehr hohe Streckgrenze des amorphen Lotbandes die Verarbeitung erheblich erschweren kann. Überall, wo ein Schneiden oder Knicken erforderlich ist, bereitet die Verwendung des amorphen Lotbandes erhebliche Schwierigkeiten.

e) Ein hoher Gehalt an Bor oder Phosphor, wie er für die Glasbildung in amorphen Legierungen notwendig ist, sollte im Lot weitgehend vermieden werden. Die sonst entstehenden Ausscheidungen verschlechtern die mechanischen Eigenschaften und die Oxidationseigenschaften erheblich.

f) Durch den hohen Nickel-Gehalt im Lot bildet sich Austenit im Trägermaterial in der Umgebung der Lötstelle. Dieser Austenit verschlechtert die Oxidationseigenschaften der Lötstelle, so daß ein verfrühtes Durchoxidieren zu beobachten ist.

Bisher wurde versucht, diese Probleme durch Verwendung möglichst geringer Mengen an Lot zu lösen. Durch Diffusion während des Lötens verteilt sich die Menge an Nickel im Bereich der Lötstelle gemeinsam über Lot- und Trägermaterial. Entscheidend ist hierbei die sehr dünne Banddicke der zu verlötenden Katalysatorträger von nur etwa 50 $\mu$m, so daß nur wenig Material für diese Diffusionsprozesse zur Verfügung steht. Um eine hinreichend geringe Nickel-Konzentration im Katalysatorträger zu erhalten, so daß keine Umwandlung zum Austenit auftritt, genügt es deshalb, lediglich die Lotmenge hinreichend gering zu halten. Dies konnte erreicht werden durch Verwendung von besonders dünnen amorphen Lötfolien.

Hierbei wurde versucht, eine Banddicke der Lötfolie von nur 15 $\mu$m einzusetzen. Diese Lösung hat aber andere schwerwiegende Nachteile. So verschlechtern wiederum die in diesen amorphen Legierungen vorhandenen glasbildenden Elemente, wie insbesondere das Bor, die Oxidationseigenschaften drastisch. Auch ist die hohe Streckgrenze der amorphen Lotbänder ungünstig. Es hat sich nämlich herausgestellt, daß die hohe Streckgrenze des amorphen Lotbandes die Verarbeitung insbesondere bei Verwendung von dünnen Metallfolien erheblich erschweren kann, insbesondere dort, wo ein Schneiden und Knicken der Lötfolie erforderlich ist.

Der Erfindung liegt die Aufgabe zugrunde, nickelhaltige Lote zur Lösung der vorstehenden Probleme zu schaffen, die auch relativ einfach herzustellen sind.

Diese Aufgabe wird mit nickelhaltigen Lotbändern gelöst, wie sie in den Patentansprüchen 1 und 6 gekennzeichnet sind. Die abhängigen Ansprüche enthalten bevorzugte Ausführungsformen der beanspruchten Lotbänder.

Die erfindungsgemäßen kristallinen Lote weisen neben Nickel und üblichen Verunreinigungen einen Siliziumgehalt von 2 bis 15 Gew.-% auf. Weitere Legierungsbestandteile können in den im Anspruch 1 angegebenen Grenzen enthalten sein. Die Lote sind frei von Bor.

Die erfindungsgemäßen Legierungszusammensetzungen haben sich als besonders günstig erwiesen. Bisher konnten Lote mit ähnlichen Legierungszusammensetzungen wegen des relativ hohen Anteils von Metalloidelementen und der damit verbundenen Versprödung nur als Pulver oder mit einem zusätzlichen organischen Binder als Lotpaste hergestellt und verwendet werden. Es hat sich überraschend gezeigt, daß mit Hilfe der Rascherstarrungstechnik kristalline und duktile Lotbänder mit diesen Legierungszusammensetzungen auf einfache Weise hergestellt werden können. Durch die schnelle Abkühlung bei der Herstellung der Bänder können die sonst auftretenden versprödenden intermetallischen Phasen weitgehend unterdrückt werden. Es gelingt so, kristalline und duktile Lotbänder auch in geringen Bandstärken herzustellen.

Die Vorteile der erfindungsgemäßen Lotbänder liegen insbesondere in einer Vereinfachung des Lötprozesses. So ist es am Beispiel des Katalysatorträgers einfach und kostengünstig, das Lotband in den Wabenkörper miteinzuwickeln. Durch Erhitzen des ganzen Wabenkörpers kommt dann die Lötung zustande, und zwar lokal begrenzt nur in dem dafür vorgesehenen Bereich.

Im folgenden werden einige besonders vorteilhafte Legierungen für Lotbänder näher beschrieben:

a) Nickel-Silizium-Basislegierung mit einem Siliziumgehalt von 2 bis 15 Gew.-% . Zur Verbesserung der Benetzung und Lötfähigkeit, sowie zur genauen Einstellung der Schmelztemperaturen können geringe Zusätze vorgesehen sein: Ti, Zr, Nb, As, P, Cu, Mn, Zn, In, Ge, Sc, c bis zu einem Gesamtgehalt von 0,1 bis 10 Gew.-%. Besonders vorteilhaft sind beispielsweise Legierungen mit 9 bis 11,5 Gew.-% Silizium, 0,5 bis 2 Gew.-% Titan, Rest Nickel. Beispiellot: Ni + 11 Gew.-% Si + 1 Gew.-% Ti.

b) Nickel-Chrom-Basislegierung mit einem Siliziumgehalt von 2 bis 15 Gew.-% und einem Chromgehalt von 2 bis 40 Gew.-%. Vorteilhaft ist ein Siliziumgehalt von nicht mehr als 8,3 Gew.-%. Weiterhin ist mindestens einer der bereits unter a) genannten Zusätze in den angegebenen Mengen und/oder 5 bis 60 Gew.-% Eisen in der Legierung enthalten.

c) Nickel-Mangan-Basislegierung mit einem Mangangehalt von 2 bis 80 Gew.-% und einem Siliziumgehalt von 2 bis 15 Gew.-%. Zur Verbesserung der Benetzung und Lötfähigkeit, sowie zur genauen Einstellung der Schmelztemperaturen sind geringe Zusätze vorgesehen an: Ti, Zr, Nb, As, P, Cu, Zn, In, Ge, Sc, C bis zu einem Gesamtgehalt von 0 bis 10 Gew.-%. Vorteilhaft sind hier Legierungen mit 7 bis 9 Gew.-% Silizium, 5 bis 15 Gew.-% Mangan, 4 bis 6 Gew.-% Kupfer, Rest Nickel. Beispiellot: Ni + 10 Gew.-% Mn + 8 Gew.-% Si + 5 Gew.-% Cu .

Der erfindungsgemäße teilweise Ersatz von Nickel durch Eisen hat sich als besonders günstig erwiesen, weil dadurch die Umwandlung im Austenit in dem ursprünglichen ferritischen Trägermaterial erheblich vermindert werden kann. Wie zuvor ausgeführt, ist eine der Ursachen für die Verschlechterung der Oxidationseigenschaften der hohe Nickelgehalt im Lot, der durch den Eisenzusatz verringert wird.

Es hat sich gezeigt, daß durch Diffusionsprozesse nach dem Löten der Gesamt-Nickelgehalt je nach Banddicke des Trägers und des Lotbandes nochmals um den Faktor 3 bis 6 reduziert werden kann. Bei Eisengehalten zwischen 5 und 60 Gew.-% kann bei allen Nickel-Basis-Loten der Nickelgehalt an der Lötstelle auf unter 15 % reduziert werden. Wegen der hohen Löslichkeit des Eisens im Nickel findet durch den Zusatz von Eisen nur eine geringe Änderung des Schmelzpunktes und keine Verschlechterung der anderen Löteigenschaften statt.

Ein typisches Anwendungsbeispiel ist ein Lot mit 8 bis 11 Gew.-% Silizium, dessen Oxidationseigenschaften dadurch drastisch verbessert werden können, wenn 30 bis 40 Gew.-% des Nickels durch Eisen ersetzt werden. Neben einer zusätzlich besseren Benetzung ist mit der Legierung Nickel + 30 bis 40 Gew.-% Eisen + 8 bis 11 Gew.-% Silizium eine deutliche Erhöhung der Lebensdauer der Lötverbindung erzielbar.

Zu Testzwecken wurden 5 mm breite Musterbänder in verschiedenen Banddicken zwischen 60 und 10 µm hergestellt. An diesen Bändern wurden neben der Duktilität, die Lötfähigkeit, die Benetzung und die Oxidationseigenschaften an Testlötungen von 50 µm dicken Fe-Cr-Al-Blechen erfolgreich geprüft.

**Patentansprüche**

1. Nickelhaltiges, kristallines, durch Rascherstarrung hergestelltes Lotband für Hochtemperatur-Lötverbindungen von Stählen und Nickelbasislegierungen, das frei ist von Bor und folgende Zusammensetzung aufweist: 2 bis 15 Gew.-% Silizium, Rest Nickel und übliche Verunreinigungen sowie vorzugsweise mindestens eines der Elemente
   a) Titan, Zirkon, Niob, Arsen, Phosphor, Kupfer, Zink, Indium, Germanium, Skandium und/oder Kohlenstoff in einer Gesamtmenge von 0,1 bis 10 Gew.-% und/oder
   b) 2 bis 80 Gew.-% Mangan und/oder
   c) 5 bis 60 Gew.-% Eisen.

2. Lotband nach Anspruch 1, dadurch gekennzeichnet, daß es 6 bis 12 Gew.-% Silizium enthält.

3. Lotband nach Anspruch 2, gekennzeichnet durch folgende Legierungszusammensetzung: 9 bis 11,5 Gew.-% Silizium, 0,5 bis 2 Gew.-% Titan und Rest Nickel.

4. Lotband nach Anspruch 2, gekennzeichnet durch folgende Legierungszusammensetzung: 7 bis 9 Gew.-% Silizium, 5 bis 15 Gew.-% Mangan, 4 bis 6 Gew.-% Kupfer und Rest Nickel.

5. Lotband nach Anspruch 2, gekennzeichnet durch folgende Legierungszusammensetzung: 30 bis 40 Gew.-% Eisen, 8 bis 11 Gew.-% Silizium und Rest Nickel.

6. Nickelhaltiges, kristallines, durch Rascherstarrung hergestelltes Lotband für Hochtemperatur-Lötverbindungen von Stählen und Nickelbasislegierungen, das frei ist von Bor und folgende Zusammensetzung aufweist: 2 bis 15 Gew.-% Silizium, 2 bis 40 Gew.-% Chrom, Rest Nickel und übliche Verunreinigungen sowie mindestens eines der folgenden Elemente: Titan, Zirkon, Niob, Arsen, Phosphor, Kupfer, Zink, Indium, Germanium, Skandium und/oder Kohlenstoff in einer Gesamtmenge von 0,1 bis 10 Gew.-% und/oder 5 bis 60 Gew.-% Eisen.

7. Lotband nach Anspruch 6, dadurch gekennzeichnet, daß es 6 bis 12 Gew.-% Silizium enthält.

8. Lotband nach einem der vorhergehenden Ansprüche, dadurch gekennzeichnet, daß es eine Dicke zwischen 10 und 60 µm aufweist.

9. Lotband nach einem der vorhergehenden Ansprüche, dadurch gekennzeichnet, daß es zum Löten von dünnen Blechfolien verwendet wird.

**Claims**

1. Crystalline strip solder, which contains nickel and is produced by rapid solidification, for high-temperature soldered connections of steel and nickel-based alloys, which strip solder is free of boron and has the following composition: 2 to 15 % by weight silicon, the remainder nickel and standard impurities and preferably at least one of the following elements:
   a) titanium, zirconium, niobium, arsenic, phosphorus, copper, zinc, indium, germanium, scandium and/or carbon in a total quantity of 0.1 to 10 % by weight and/or
   b) 2 to 80 % by weight manganese and/or
   c) 5 to 60 % by weight iron.

**2.** Strip solder as claimed in Claim 1, characterised in that it contains 6 to 12 % by weight silicon.

**3.** Strip solder as claimed in Claim 2, characterised by the following alloy composition: 9 to 11.5 % by weight silicon, 0.5 to 2 % by weight titanium and the remainder nickel.

**4.** Strip solder as claimed in Claim 2, characterised by the following alloy composition: 7 to 9 % by weight silicon, 5 to 15 % by weight manganese, 4 to 6 % by weight copper and the remainder nickel.

**5.** Strip solder as claimed in Claim 2, characterised by the following alloy composition: 30 to 40 % by weight iron, 8 to 11 % by weight silicon and the remainder nickel.

**6.** Crystalline strip solder, which contains nickel and is produced by rapid solidification, for high-temperature soldered connections of steel and nickel-based alloys, which strip solder is free of boron and has the following composition: 2 to 15 % by weight silicon, 2 to 40 % by weight chrome, the remainder nickel and standard impurities and at least one of the following elements: titanium, zirconium, niobium, arsenic, phosphorus, copper, zinc, indium, germanium, scandium and/or carbon in a total quantity of 0.1 to 10 % by weight and/or 5 to 60 % by weight iron.

**7.** Strip solder as claimed in Claim 6, characterised in that it contains 6 to 12 % by weight silicon.

**8.** Strip solder as claimed in one of the preceding claims, characterised in that it has a thickness of between 10 and 60 $\mu$m.

**9.** Strip solder as claimed in one of the preceding claims, characterised in that it is used for the soldering of thin metal sheets.

**Revendications**

**1.** Bande à braser cristalline, contenant du nickel, fabriquée par solidification rapide, pour jonction par brasage à haute température d'aciers et d'alliages à base de nickel, qui est exempte de bore et présente la composition suivante : de 2 à 15 % en poids de silicium, le reste étant constitué de nickel et d'impuretés usuelles, ainsi que, de préférence, au moins un des éléments
   a) titane, zirconium, niobium, arsenic, phosphore, cuivre, zinc, indium, germanium, scandium et/ou carbone en une quantité totale allant de 0,1 à 10 % en poids et/ou
b) de 2 à 80 % en poids de manganèse et/ou
c) de 5 à 60 % en poids de fer.

**2.** Bande à braser selon la revendication 1, caractérisée en ce qu'elle contient de 6 à 12 % en poids de silicium.

**3.** Bande à braser selon la revendication 2, caractérisée par la composition d'alliage suivante : 9 à 11,5 % en poids de silicium, 0,5 à 2 % en poids de titane et le reste constitué de nickel.

**4.** Bande à braser selon la revendication 2, caractérisée par la composition d'alliage suivante : 7 à 9 % en poids de silicium, 5 à 11 % en poids de manganèse, 4 à 6 % en poids de cuivre et le reste constitué de nickel.

**5.** Bande à braser selon la revendication 2, caractérisée par la composition d'alliage suivante : 30 à 40 % en poids de fer, 8 à 11 % en poids de silicium et le reste constitué de nickel.

**6.** Bande à braser cristalline, contenant du nickel, fabriquée par solidification rapide, pour jonction par brasage à haute température d'aciers et d'alliages à base de nickel, qui est exempte de bore et comporte la composition suivante : de 2 à 15 % en poids de silicium, de 2 à 40 % en poids de chrome, le reste constitué de nickel et d'impuretés usuelles, ainsi qu'au moins l'un des éléments suivants : titane, zirconium, niobium, arsenic, phosphore, cuivre, zinc, indium, germanium, scandium et/ou carbone en une quantité totale allant de 0,1 à 10 % en poids et/ou 5 à 60 % de fer.

**7.** Bande à braser selon la revendication 6, caractérisée en ce qu'elle contient de 6 à 12 % en poids de silicium.

**8.** Bande à braser selon l'une quelconque des revendications précédentes, caractérisée en ce qu'elle présente une épaisseur comprise entre 10 et 60 $\mu$m.

**9.** Bande à braser selon l'une quelconque des revendications précédentes, caractérisée en ce qu'elle est utilisée pour le brasage de tôles minces.